# EUROPEAN PATENT SPECIFICATION

(11) **EP 0 992 172 B1**
(45) Date of publication and mention of the grant of the patent: **10.08.2005**
(21) Application number: 99908139.1
(22) Date of filing: 12.02.1999
(51) Int. Cl.: H04Q 7/38

(54) **METHOD AND SYSTEM FOR PERFORMING A HANDOFF IN A WIRELESS COMMUNICATION SYSTEM, SUCH AS A HARD HANDOFF**
VERFAHREN UND VORRICHTUNG ZUM DURCHFÜHREN DES WEITERREICHENS IN EINEM DRAHTLOSEN KOMMUNIKATIONSSYSTEM, WIE BEISPIELSWEISE HARTES WEITERREICHEN
PROCEDE ET SYSTEME POUR LE TRANSFERT DANS UN SYSTEME DE RADIOCOMMUNICATION, DU TYPE TRANSFERT STRICT

(30) Priority: 13.02.1998 US 74733 P; 11.02.1999 US 248700; 11.02.1999 US 248701
(43) Date of publication of application: 12.04.2000
(60) Divisional application: 05007867.4
(73) Proprietor: QUALCOMM INCORPORATED, San Diego, CA 92121-1714 (US)
(72) Inventor: ODENWALDER, Joseph, P., Del Mar, CA 92014 (US)
(74) Representative: Wagner, Karl H., Dipl.-Ing.
(86) International application number: PCT/US1999/003088
(87) International publication number: WO 1999/041934

(56) References cited:
- EP-A- 0 667 726
- WO-A-97/29611
- SATARASINGHE P: "A NOVEL METHOD FOR CDMA HARD HANDOFF" COMMUNICATIONS: THE KEY TO GLOBAL PROSPERITY. GLOBECOM 1996, LONDON, NOV. 18 - 22, 1996, vol. 3, 18 November 1996, pages 1766-1768, XP000748752 INSTITUTE OF ELECTRICAL AND ELECTRONICS ENGINEERS

## Description

### I. Field of the Invention

The invention relates to wireless communication system, and, more particularly, to methods and apparatus for providing hard handoffs between cells in such systems.

### BACKGROUND OF THE INVENTION

In a code division multiple access (CDMA) system, the vast majority of handoffs happen between cells on the same CDMA channel and use soft handoff procedures. On some occasions, the mobile stations need to perform a handoff between cells on different CDMA channels where such channels are at different radio frequencies (FR), often denoted as inter-frequency hard handoff. Such situations are typically, but not limited to, either a handoff between different operators, a handoff between different RF channels allocated for capacity reasons, or a handoff between different signal modulation technologies.

Before effecting an inter-frequency hard handoff, the mobile station is directed by the base station to tune to the new target frequency, measure the radio environment (*e.g*., pilot signal strength of the received signals, etc.), and report the measurement back to the base station. Such a procedure is specified in TIA/EIA-95-B and greatly enhances the probability of success of an inter-frequency handoff.

An essential requirement of the measurement on the target frequency, often referred to as "search excursion," is to minimize the disruption of the current service on the originating frequency. Handoffs to a second frequency without adequate prior sampling could result in poor signal performance. On the other hand, sampling for long periods of time may cause the signal at the first frequency to be lost completely. The method described below permits the mobile station to minimize the search time and to limit the disruption of service.

WO-A-97 40592 discloses an introduction of discontinuous transmission in CDMA communications techniques which is achieved by selectively using additional spreading codes for spreading a frame of data. By dividing a frame into two or more portions and spreading each portion with a different spreading code, the frame can be transmitted in a compressed mode wherein the information is transmitted during a portion of the frame period, leaving an idle part of the frame in which to perform other functions, such as evaluation of other frequencies for use in handover between frequencies.

In "Compressed Mode Techniques for Inter-Frequency Measurements in a Wide-Band DS-CDMA System" M. Gustaffson et al, Waves of the Year 2000+, PIMRC, The IEEE International Symposium on Personal Indoor and Mobile Radio Communications, Sep. 1, 1997 Inter-Frequency Hand-Over (IFHO) in third generation cellular systems based on Wide-band DS-CDMA is discussed. In order to provide maximum flexibility for future radio network design, it is important to develop a technique allowing reliable IFHO in the system. The Compressed Mode (CM) scheme facilitates the use of the Mobile-Assisted Hand-Over (MAHO) technique commonly used in all second generation systems, also for IFHO in a CDMA system. Four different ways of achieving a CM mechanism in a CDMA system are presented and analyzed. It is found that methods based on variable spreading factor and coding-rate increment may be of most interest for practical use.

In accordance with the present invention, a method for performing frequency search excursion in a wireless communications system as set forth in claim 1, a wireless communication user station for exchanging communications with a base station as set forth in claim 8 and a wireless communication system as set forth in claim 26 is provided. Preferred embodiments of the invention are disclosed in the dependent claims.

### SUMMARY OF THE INVENTION

The invention overcomes the limitations described above, and provides additional benefits by providing a method and apparatus that minimizes the search time to another frequency and limits the disruption of service. This method is applicable to all types of services (voice, packet data, circuit data, signaling) the mobile station is connected to, and does not depend on the number of dedicated code channels assigned on the forward link and the reverse link.

One aspect of the invention involves receiving a frequency change command at a user station, such as a mobile station, to switch from receiving a signal on a first frequency to receiving a signal on a target frequency; tuning the mobile station to the target frequency and collecting and storing signal samples; tuning the mobile station to the first frequency and processing the signal samples; and transmitting signal sample processing results to a base station.

In accordance with another embodiment of the invention, a wireless communication system is disclosed herein that includes a user station, such as a mobile station, having at least a transmitter circuit, a receiver circuit, and a memory buffer. The mobile station is configured to receive a frequency change command from a base station to switch to a target frequency, to tune to the target frequency and collect and store signal samples in the memory buffer, to tune back to a first frequency and process the stored signal samples, and to transmit sample processing results to the base station. The mobile station can be further configured to minimize the loss of forward and reverse link symbols during switching to the target frequency by increasing the amount of power allocated to the other symbols of a frame impacted by the switch to the target frequency. The additional amount of power to be allocated to the symbols not impacted by the switch to the target frequency for the frame to be demodulated is a function of the time the mobile station is at the target frequency.

### BRIEF DESCRIPTION OF THE DRAWINGS

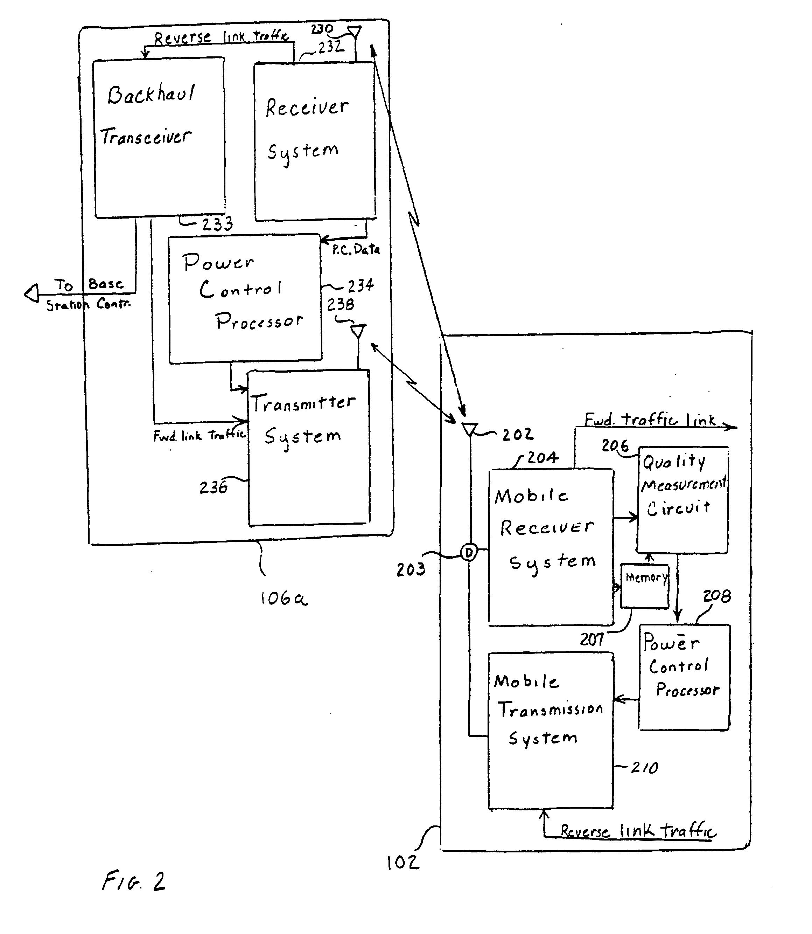

In the figures, like reference numbers identify similar elements. For ease in identifying the discussion of any particular element, the most significant digit in a reference number refers to the figure number in which that element is first introduced (*e.g.,* element 204 is first introduced and discussed with respect to FIG. 2).
FIG. 1 illustrates a typical wireless communication system that can employ the invention.
FIG. 2 is a block diagram of typical components found in the wireless communication system of FIG. 1 that can employ the invention.
FIG. 3 is a timing diagram of an inter-frequency search excursion.
FIG. 4 is a flowchart of a method for performing a frequency search excursion under an embodiment of the invention.
FIG. 5 is a graph of power verses time that illustrates the succession of forward link power levels related to inter-frequency search excursions.
FIG. 6 is a graph of power versus time that illustrates a reverse link power increase during search excursion.
FIG. 7 is a flowchart of a method for performing a frequency search excursion while minimizing disruption of service in accordance with another embodiment of the invention.

### DETAILED DESCRIPTION OF THE PREFERRED EMBODIMENTS

A wireless communication system, and, in particular, a method and apparatus for minimizing search excursion time to a target frequency and disruption of current service on an originating frequency is described in detail herein. In the following description, numerous specific details are provided to give a thorough understanding of the invention. One skilled in the relevant technology, however, will readily recognize that the invention can be practiced without these specific details or with alternative elements or steps. In other instances, well-known structures and methods are not shown in detail to avoid obscuring the invention.

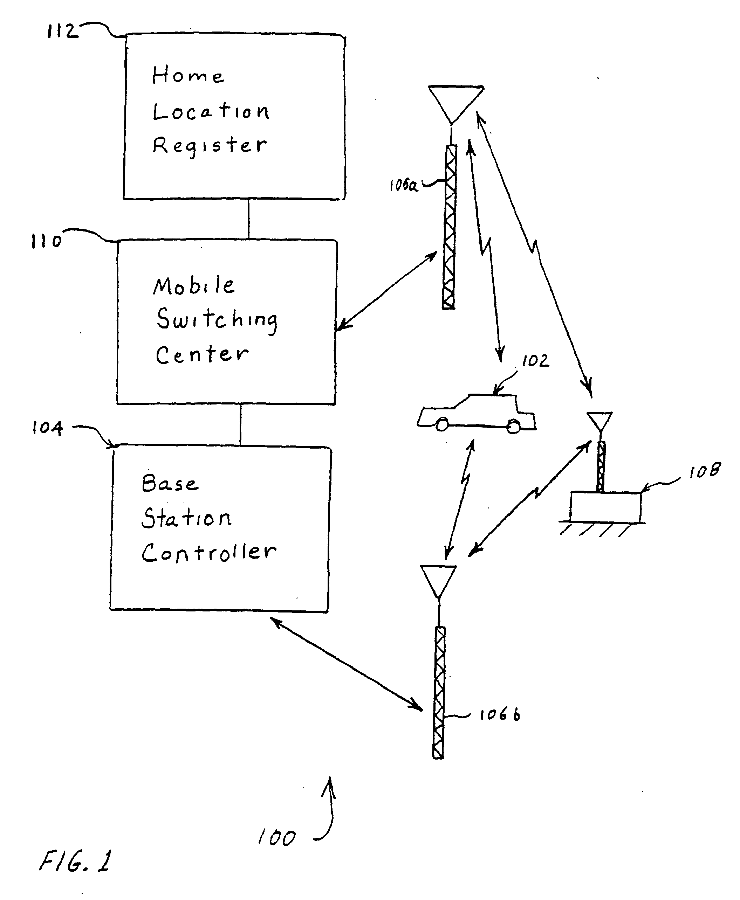

FIG. 1 illustrates a cellular subscriber communication system 100 that uses multiple access techniques, such as code division multiple access (CDMA) for communicating between users of user stations (e.g., mobile telephones) and cell sites or base stations. In FIG. 1, a mobile user station **102** communication with a base station controller **104** by means of one or more base stations **106a, 106b,** etc. Similarly, a fixed user station **108** communicates with the base station controller **104,** but by means of only one or more predetermined and proximate base stations, such as the base stations **106a** and **106b.**

The base station controller **104** is coupled to and typically includes interface and processing circuitry for providing system control to the base stations **106a** and **106b.** The base station controller **104** may also be coupled to and communicate with other base stations, and possibly even other base station controllers. The base station controller **104** is coupled to a mobile switching center **110** that in turn is coupled to a home location register **112.** During registration of each user station at the beginning of each call, the base station controller **104** and the mobile switching center **110** compare registration signals received from the user stations to data contained in the home location register **112,** as is known in the art. Handoffs may occur between the base station controller **104** and other base controllers, and even between the mobile switching center **110** and other mobile switching centers, as is known by those skilled in this technology.

When the system **100** processes voice or data traffic calls, the base station controller **104** establishes, maintains, and terminates the wireless link with the mobile station **102** and the fixed station **108,** while the mobile switching center **110** establishes, maintains, and terminates communications with a public switched telephone network (PSTN). While the discussion below focuses on signals transmitted between the base station **106a** and the mobile station **102,** those skilled in this technology will recognize that the discussion equally applies to other base stations and to the fixed station **108.** The terms "cell" and "base station" are generally used interchangeably herein.

Referring to FIG. 2, the mobile station **10** includes an antenna **202** that transmits signals to, and receives signals from the base station **106a**. A duplexer **203** provides a forward link channel or signal from the base station **106a** to a mobile receiver system **204.** The receiver system **204** down-converts, demodulates, and decodes the received signal. The receiver system **204** then provides a predetermined parameter or set of parameters to a quality measurement circuit **206.** Examples of parameters might include measured signal to noise ratio (SNR), measured received power, or decoder parameters such as symbol error rate, Yamamoto metric, or parity bit check indication. A memory buffer **207** can be included for use with the invention described herein. Additional details regarding operation of the mobile station **102** (and the base station **106a**) are found, for example, in U.S. Patent No. 5,751,725, entitled "METHOD AND APPARATUS FOR DETERMINING THE RATE OF RECEIVED DATA IN A VARIABLE RATE COMMUNICATION SYSTEM," assigned to the assignee of the present invention, and incorporated by reference herein.

The quality measurement circuit **206** receives the parameters from the receiver system **204** and determines a quality measurement signal or power level of the received signal. The quality measurement circuit **206** can generate energy per bit (E_{b}) or energy per symbol (Eₛ) measurements from portions or windows of each frame. Preferably, the energy per bit or energy per symbol measurements are normalized (*e.g.*, E_{b}/Nₒ), or normalized and include interference factors (*e*.*g*., E_{b}/Nₜ), as is known in the art. Based on these measurements, the quality measurement circuit **206** produces a power level signal.

A power control processor **208** receives the power level signal from the quality measurement circuit **206,** compares the signal to a threshold, and produces a power control message based on the comparison. Each power control message can indicate a change in power for the forward link signal. Alternatively, power control processor **208** produces power control messages representing the absolute power of the received forward link signal, as is known in the art. The power control processor **208** produces preferably several (*e.g.*, sixteen) power control messages in response to several power level signals per frame. While the quality measurement circuit **206** and power control processor **208** are generally described herein as separate components, such components can be monolithically integrated, or the operations performed by such components can be performed by a single microprocessor.

A mobile transmission system **210** encodes, modulates, amplifies, and up converts the power control messages, via the duplexer **203** and the antenna **202.** In the illustrated embodiment, the mobile transmission system **210** provides the power control message in a predetermined location of an outgoing reverse link frame.

The mobile transmission system **210** also receives reverse link traffic data, such as voice or general computer data, from the user of the mobile station. The mobile transmission system **210** requests a particular service (including power/rate) from the base station **106a** based on the traffic data to be transmitted. In particular, the mobile transmission system **210** requests bandwidth allocation appropriate for the particular service. The base station **106a** then schedules or allocates bandwidth (power/rate) resources based on requests from the mobile station **102** and other users to optimize such resource allocation, given power constraints of the system. Thus, effectively managing transmission power in the system will permit more effective bandwidth use.

The base station **106a** includes a receiving antenna **230** that receives the reverse link frames from the mobile station **102.** A receiver system **232** of the base station **106a** down converts, amplifies, demodulates, and decodes the reverse link traffic. A backhaul transceiver **233** receives and forwards to the base station controller **104** reverse link traffic. The receiver system **232** also separates the power control messages from each reverse link traffic frame and provides the power control messages to a power control processor **234.**

The power control processor **234** monitors the power control messages and produces a forward link transmitter power signal to a forward link transmitter system **236.** The forward link transmitter system **236,** in response thereto, either increases, maintains, or decreases the power of the forward link signal. The forward link signal is then transmitted via a transmitting antenna **238.** Additionally, the power control processor **234** analyzes the quality of the reverse link signal from the mobile station **102** and provides appropriate feedback control messages to the forward link transmitter system **236.** The forward link transmitter system **236,** in response thereto, transmits the feedback control messages via the transmitting antenna **238** over the forward link channel to the mobile station **102.** The transmitter system **236** also receives forward link traffic data from the base station controller **104** via the backhaul transceiver **233.** The forward link transmitter system **236** encodes, modulates, and transmits via the antenna **238** the forward link traffic data.

Unless described otherwise herein, the construction and operation of the various blocks and elements shown in FIGS. 1 and 2 and the other figures are of conventional design and operation. Thus, such blocks or elements need not be described in further detail because they will be understood by those skilled in the relevant art. Any additional description is omitted for brevity and to avoid obscuring the detailed description of the invention. Any modifications necessary to the blocks of the communication system **100** of FIGS. 1 and 2, or the other systems shown therein can be readily made by one skilled in the relevant art based on the detailed description provided herein.

The closed-loop power control system for user stations, including the mobile station **102** and base station **106a,** dynamically adjusts the transmit power for each user based on the user's propagation conditions to yield the same frame error rate (FER) for each user for voice services (*e.g.*, a 1% FER). As noted above, many users, however, may request transmission for data services in lieu of voice services, such as facsimile, e-mail and general computer data, all of which are insensitive to delay but require a lower FER (or lower bit error rate (BER)). A user may even require video services, which not only require a lower FER but are sensitive to delay. The base station **106a** dynamically assigns transmission rates based on requests from each user under known techniques.

Under one CDMA standard, described in the Telecommunications Industry Association's TIA/EIA-95-A Mobile Stations-Base Station Compatibility Standard For Dual-Mode Wideband Spread Spectrum Cellular System, each base station transmits pilot, sync, paging, and forward traffic channels to its users. The pilot channel is an unmodulated, direct-sequence spread spectrum signal transmitted continuously by each base station. The pilot channel enables each user to acquire the timing of the channels transmitted by the base station, and it provides a phase reference for coherent demodulation. The pilot channel also provides a means for signal strength comparisons between base stations to determine when to hand off between base stations (such as when moving between cells). Recent CDMA modulation techniques have been proposed using dedicated time multiplexed ("DTMP") pilot symbols. Under the DTMP approach, separate pilot symbols are time multiplexed on each user's traffic channel. Each user sequentially de-spreads the pilot symbols (and information symbols). There is also an alternative common code multiplexed pilot ("CCMP") approach, where one co-channel is dedicated to broadcasting a pilot signal. No pilot symbols are multiplexed with dedicated channels, and all users de-spread both the pilot symbols and the modulated information signals in parallel. Such systems are described in more detail in U.S. Patent Application No. 09/144,402, filed August 31, 1998, entitled METHOD AND APPARATUS FOR REDUCING AMPLITUDE VARIATIONS AND INTERFERENCE IN COMMUNICATION SIGNALS, SUCH AS WIRELESS COMMUNICATION SIGNALS EMPLOYING INSERTED PILOT SYMBOLS, assigned to the same assignee of this invention.

### Inter-Frequency Search

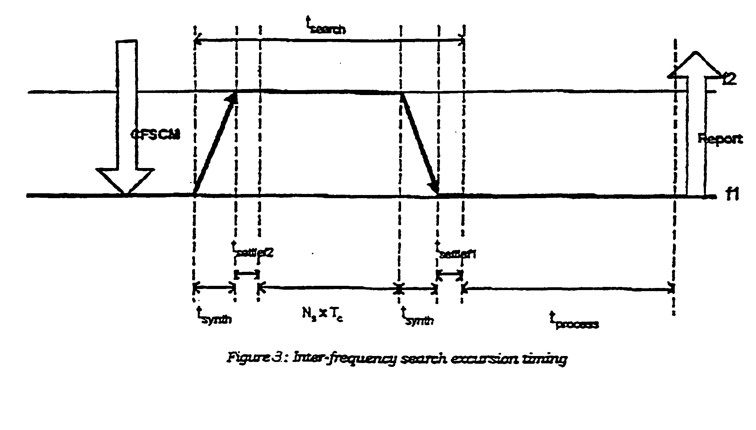

Referring next to FIG. 3, shown therein is a diagram of the different timing involved in performing a search excursion. While FIG. 3 would be self-explanatory to one of ordinary skill in the relevant art, a brief explanation is provided. The reference t_{search} corresponds to the time required to collect the N samples on frequency f2. The total time will be t_{search} plus the time it takes to process the samples after returning to the original frequency f1. The times t_{synth} and tₛₑₜₜₗₑ correspond to the time required to switch and settle at a new frequency, respectively. The time period of Nₛ x T_{c} represents the sampling time for Nₛₐₘₚₗₑₛ, and t_{process} represents the time to process the samples.

A method for minimizing the search time to another frequency can be described as follows:

First, the mobile station is currently demodulating an original or first frequency f1. An inter-frequency hard handoff to a target frequency f2 might be required, such as when certain signal quality measurements (*e*.*g*., those noted above) fall below predetermined thresholds. When reporting such dropping quality to the base station **106a,** the mobile station 102 is directed by the base station (*e.g.,* via a Candidate Frequency Search Request/Control Message ("CFSCM")) to perform a search excursion to a target frequency f2.

The mobile station tunes to frequency f2 and collects N chip samples (a chip being one bit of pseudonoise at, for example, 1024 bps for orthogonally encoded symbols). The samples are stored in a memory buffer; the mobile station does not perform pilot searches and pilot strength measurements while on frequency f2. The mobile station tunes back to the original frequency f1, resumes reception of forward link and transmission of reverse link, and processes the N samples collected on frequency f2 simultaneously.

The mobile station processes the samples collected on frequency f2 using a searcher that processes the stored samples while simultaneously processing the signal received on the original frequency f1. The mobile station reports to the base station the corresponding pilot strength measurements from frequency f2. One of skill in this technology will recognize the searcher referred to above and would have the requisite skill to provide or obtain the same.

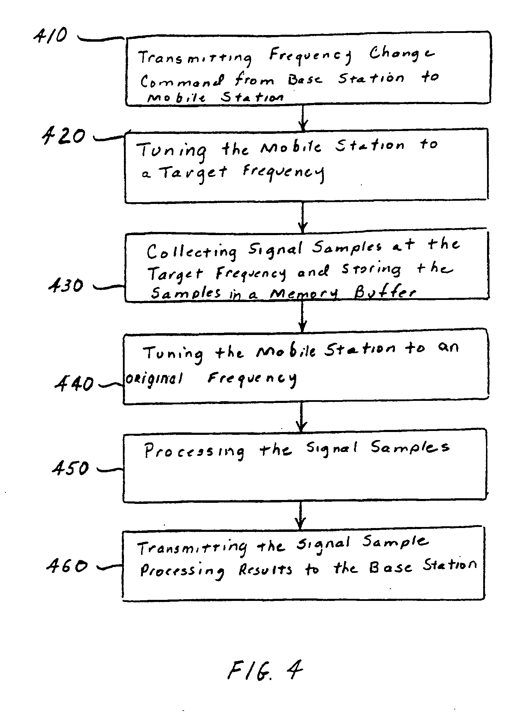

The foregoing method is illustrated in FIG. 4 as a routine **400** that begins in step 410 where the base station **106a** transmits a frequency change command to the mobile station **102** under a Candidate Frequency Search Request Control Message as defined by TIA/EIA-95-B Standard incorporated by reference. In response to this command, the mobile station 102 tunes to the target frequency f2 under step 420.

In step 430, the mobile station **102** collects signal samples at the target frequency f2 and locally stores the samples in the memory buffer **207.** Under step 440, the mobile station **102** tunes back to the first frequency f1 and processes the signal samples stored in the memory buffer **207** under step 450. Note, steps 440 and 450 can be performed concurrently.

After the signal samples are processed as described above, the mobile station **102** under step 460 transmits the signal sample processing results to the base station **106a**.

### Minimizing Impact of Search Excursion on Current Frame

When the mobile station tunes to another frequency f2 to perform an inter-frequency search, forward link symbols transmitted by the base station during the t_{search} time period cannot be received by the mobile station. Similarly, the mobile station does not transmit during t_{search} and the base station loses reverse link symbols during the t_{search} time period. To minimize the impact of this loss on both the current forward and reverse link frames, the mobile and base stations increase the amount of power allocated to the other symbols of the forward-error-correction-encoded and interleaved frame of symbols impacted by the search excursion. For the frame to be demodulated correctly, the additional amount of power required for symbols not impacted by the search excursion is a function of the search excursion time t_{search}, as noted herein.

### Forward Link Power Control During Search Visit

To overcome the loss of forward link symbols during the t_{search} time period, the mobile station increases the target E_{b}/Nₒ of the forward link closed-loop fast power control by Δ _{target} dB.

This new target E_{b}/Nₒ is set K power control groups (PCG) before the search excursion. The required number K of previous PCGs affected before the search excursion and the required increase in target E_{b}/Nₒ (Δ _{target}) depends on the duration of the search excursion t_{search}; the longer t_{search} is, the larger K. As a result of the increase in the target E_{b}/Nₒ, the forward link power will ramp-up prior to the inter-frequency search.

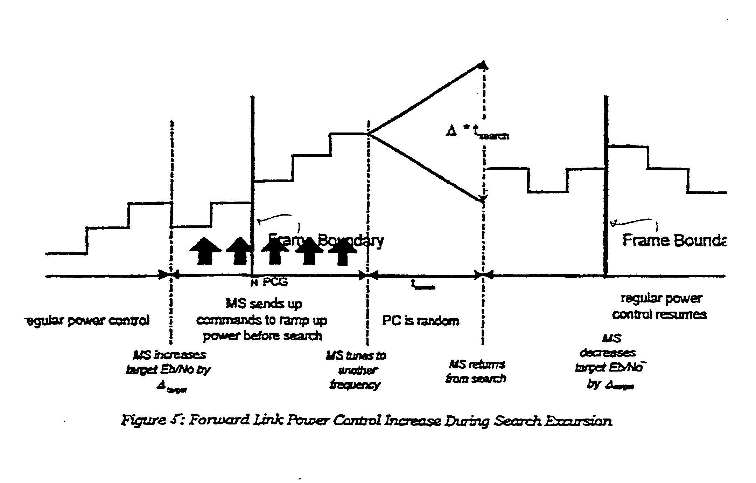

FIG. 5 illustrates the succession of forward link power levels related to an inter-frequency search excursion. Although FIG. 5 is self-explanatory to one of ordinary skill in the relevant art, a brief explanation is provided. After the search excursion, the mobile station **102** resumes demodulation of the forward link symbols of the current frame. At this stage the mobile station **102** knows the total symbol energy received in the current frame and can compare this to the required energy per frame to achieve the target frame error rate. The mobile station **102** can use this metric to increase or decrease the target E_{b}/Nₒ for the remaining power control groups of the frame. If the search excursion expands over a frame boundary, the mobile station **102** may increase its target E_{b}/Nₒ during the next frame to make up for the lost symbols in the first part of the frame. Details regarding closed loop power control can be found, for example, in U.S. Patent Application Nos. 08/752,860 and 08/879,274, entitled METHOD AND APPARATUS FOR ADJUSTING THRESHOLDS AND MEASUREMENTS OF RECEIVED SIGNALS BY ANTICIPATING POWER CONTROL COMMANDS YET TO BE EXECUTED and METHOD AND APPARATUS FOR POWER ADAPTATION CONTROL AND CLOSED-LOOP COMMUNICATIONS filed November 20, 1996 and June 20, 1997, all respectively, and assigned to the assignee of this invention.

### Reverse Link Power Control During Search Visit

While searching on the target frequency f2, the base station **106a** will lose communication with the mobile station **102** and will not receive symbols during the t_{search} time period. To overcome the loss of those symbols, the mobile station **102** can increase the total transmission power on the reverse link by a quantity Δ _{search} dB. The quantity Δ _{search} depends on the duration of the search t_{search} and corresponds to the additional required symbol energy over the remainder of the frame to overcome the loss of symbols during t_{search} and still permit the base station **106a** to demodulate the frame correctly. The base station **106a** can inform the mobile station **102** of the maximum tolerable increase Δ _{search} dB in the message directing the mobile station to perform an inter-frequency search (*e.g.*, in the ("FCSM")). This value can depend on the maximum tolerable interference currently determined by the base station **106a**.

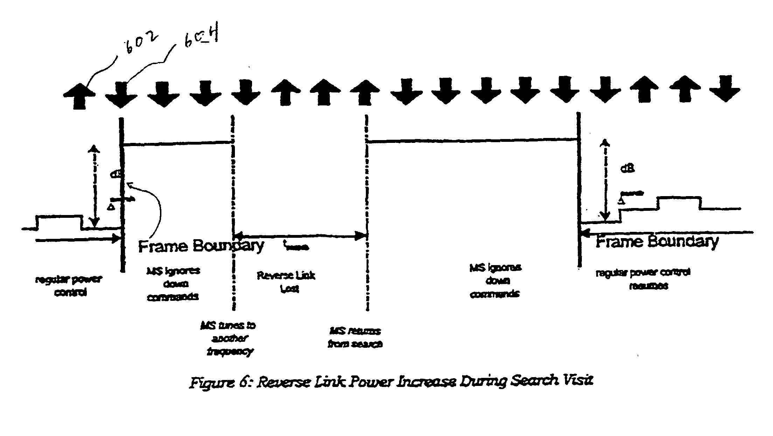

FIG. 6 illustrates the succession of reverse link power increases during a search excursion. While FIG. 6 would be self-explanatory to one of ordinary skill in the relevant art, a brief explanation is provided. During the inter-frequency search frame, transmitted with a power increase, the base station **106a** will send down commands ordering the mobile station **102** to reduce its power. The mobile station **102** simply ignores those down commands until the end of inter-frequency search frame, as shown in FIG. 6. These up and down commands are represented by the large dark arrows **602, 604,** respectively, in FIG. 6. If the search excursion expands over a frame boundary, the mobile station **102** can increase its total transmit power during the next frame in a fashion similar to that noted above to overcome the loss of the initial symbols of the next frame. Regular power control resumes after the frame boundary, as shown in FIG. 6.

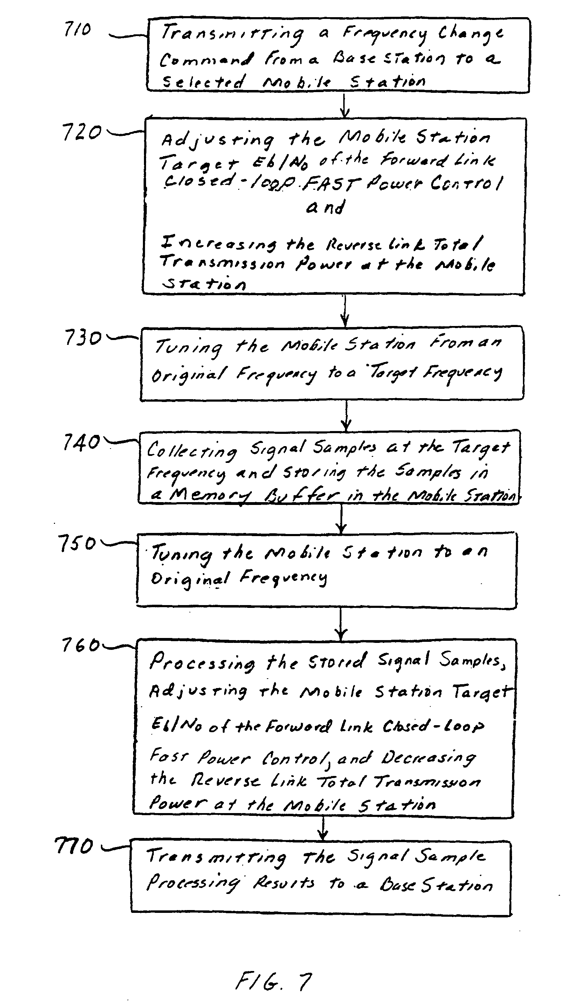

Thus, the method described previously with respect to FIG. 4 can be modified to ensure uninterrupted communication during a search excursion. FIG. 7 shows the steps of the modified method, beginning with step **710,** where the base station **106a** transmits the frequency change command (FCSM) to the mobile station **102.**

Before the mobile station **102** tunes to the target frequency, the target E_{b}/Nₒ of the forward link closed-loop fast power control is increased from a first level to a second level as described above. The mobile station **102** increases the total transmission power on the reverse link by a quantity _{-search} dB, as also described above and illustrated in step **720.**

The mobile station then tunes to the target frequency and collects target frequency signal samples, such as chip sample data, and stores the signal samples in the memory **207,** under steps 730-740.

In step 750, the mobile station 102 tunes back to the first frequency when the collection of signal samples is complete. The mobile station **102** processes the signal samples in the memory buffer and resumes communication with the base station **106a** at the first frequency f1. In resuming communications, the mobile station **102** adjusts the target E_{b}/Nₒ of the remaining power control groups in the frame, and then reduces the target E_{b}/Nₒ by Δ _{target} and the reverse link total transmission power resumes regular control, as illustrated in step **760.**

Finally, under **780,** the signal sample processing results, such as at the pilot strength measurements, are transmitted to the base station.

The base station **106a** and the mobile station **102** can be configured to accomplish the foregoing process. Source code to accomplish the foregoing can be readily generated by those of ordinary skill in this technology based on the detailed description provided herein.

While a preferred embodiment of the invention has been illustrated and described above, it is to be understood that various changes may be made therein without departing from the spirit and scope of the invention. For example, the mobile station **102** can use the state of its long code mask to select a starting position within a frame to perform the inter-frequency search. The mobile station **102** can select a randomization period such that the inter-frequency search would typically not expand over a frame. Randomizing the search excursion position between different mobile stations will reduce the reverse link interference and will decrease the total power requirement on the forward link. Consequently, the invention is to be limited only by the scope of the claims that follow.

Although specific embodiments of, and examples for, the invention are described herein for illustrative purposes, various equivalent modifications can be made without departing from the scope of the invention, as will be recognized by those skilled in the relevant art. For example, embodiments are generally shown and described as being implemented in software and performed by a processor. Such software can be stored on any suitable computer-readable medium, such as microcode stored in a semiconductor chip, computer-readable disk, or downloaded and stored from a server. The invention could equally be implemented in hardware, such as by a DSP or ASIC.

The teachings provided herein of the invention can be applied to other communications systems, not necessarily the illustrated communication system described above. For example, while the invention has been generally described above as being employed in the CDMA communication system **100,** the invention is equally applicable to other digital or analog cellular communication systems. The invention can be modified to employ aspects of the systems, circuits, and concepts of the various patents and standards described above, all of which are incorporated by reference.

These and other changes can be made to the invention in light of the above detailed description. In general, in the following claims, the terms should not be construed to limit the invention to the specific embodiments disclosed in the specification and the claims. Accordingly, the invention is not limited by the disclosure, but instead its scope is to be determined entirely by the following claims.

## Claims

1. A method for performing frequency search excursion in a wireless communications system (100) having a user station (102) communicating with a base station (106), the method comprising:
receiving a frequency change command at the user station (102) to switch from receiving signals on an original frequency to receiving signals on a target frequency;
configuring the user station (102) to overcome loss of forward link symbols during sampling of the target frequency by increasing (720) a target ratio of energy per symbol E_{b}/Nₒ on the forward link power control allocated to other symbols impacted by the search of the user station (102);
tuning (730) the user station (102) to the target frequency and collecting and storing (740) signal samples from the target frequency;
tuning (750) the user station (102) to the original frequency;
processing (760) the stored samples; and
transmitting (770) sample processing results to a base station (106).

2. The method of claim 1, further comprising:
transmitting (710) a frequency change command from a base station (106) before the step of receiving; and
wherein the step of receiving comprises receiving the frequency change command at the user station (102).

3. The method of claim 1 or 2, wherein the transmitting sample processing results to a base station (106) comprises:
transmitting pilot strength measurements to a base station (106).

4. The method of claim 2 or 3, wherein the transmitting (710) a frequency change command from the base station further comprises transmitting a maximum tolerable increase in the reverse link total transmission power from the user station (102); and
wherein the configuring the user station (102) to overcome loss of forward link symbols further comprises determining the duration of the search excursion time, determining the required number of power control groups and forward and reverse links affected by the search excursion, increasing the target E_{b} /Nₒ of the forward link closed-loop fast power control in the affected power control groups; and increasing the reverse link total transmission power at the user station (102) to a level no greater than the maximum tolerable increase prior to the search excursion; and
wherein the tuning (750) the user station (102) to the original frequency further comprises adjusting the target E_{b} /Nₒ of the forward link closed-loop fast power control for the remaining power control groups, and reducing the reverse link total transmission power level at the user station (102).

5. The method of any of the claims 1 to 3, wherein the configuring the user station (102) to overcome loss of forward link symbols further comprises increasing the reverse link total transmission power at the user station (102); and
wherein the tuning (750) the user station (102) to the original frequency further comprises decreasing the reverse link total transmission power, and adjusting the user station (102) target E_{b} /Nₒ of the forward link closed-loop fast power control.

6. The method of any of the claims 1 to 3, wherein the configuring the user station (102) to overcome loss of forward link symbols further comprises increasing the user station (102) target E_{b} /Nₒ of the forward link closed-loop fast power control by an amount that is a function of search excursion time to cause the forward link power to increase prior to the user station (102) tuning (730) to the target frequency, and increasing the reverse link total transmission power to a level determined by the base station (106) and communicated in the frequency change command; and
wherein the tuning (750) of the user station (102) to the original frequency further comprises adjusting the target E_{b} /Nₒ of remaining power control groups of a received frame; and reducing the reverse link total transmission power of the user station (102).

7. The method of any of the claims 1 to 3, wherein the configuring the user station (102) to overcome loss of forward link symbols comprises increasing the amount of power allocated to other symbols of a frame impacted by the frequency search excursion to minimize the effect of the loss of forward and reverse link symbols during the frequency search excursion.

8. A wireless communication user station (102) for exchanging communications with a base station (106), the user station (102) comprising:
means for transmitting signals (210);
means for receiving signals, including means for tuning to selected signal frequencies (204);
means for configuring the user station (102) to overcome loss of forward link symbols during sampling of a target frequency by increasing (720) a target ratio of energy per symbol E_{b} /Nₒ on a forward link power control allocated to other symbols impacted by the search of the user station (102);
means for sampling a target frequency in response to a frequency sampling command from the base station (106), the sampling means comprising means for storing the target frequency samples when the receiver is tuned to the target frequency; and
means for processing the target frequency samples, the processing means configured to process the target frequency samples after the receiving means has resumed communications on an original frequency.

9. The user station (102) of claim 8, wherein the means for configuring is configured;
to minimize the loss of forward and reverse symbols of the current forward and reverse link frames by increasing the amount of power allocated to the other symbols of the frame impacted by the sampling of the target frequency and by adjusting the amount of power allocated to the symbols not impacted by the sampling of the target frequency.

10. The user station (102) of claim 8, wherein the means for configuring is configured:
to minimize the loss of forward and reverse symbols of the current forward and reverse link frames by increasing the amount of power allocated to the other symbols of the frames impacted by the search excursion and adjusting as a function of the amount of sampling time the amount of power allocated to the symbols not impacted by the search excursion.

11. The user station (102) of claim 8, wherein the means for configuring is configured:
to overcome the loss of forward link symbols during the sampling of the target frequency by increasing the target E_{b} /Nₒ of the forward link closed-loop fast power control of the user station (102).

12. The user station (102) of claim 8, wherein the means for configuring is configured:
to overcome the loss of forward link symbols during the sampling of the target frequency by increasing the target E_{b} /Nₒ of a predetermined number of forward link closed-toop fast power control groups prior to sampling of the target frequency.

13. The user station (102) of claim 8, wherein the means for configuring is configured:
to overcome the loss of forward link symbols during the sampling of the target frequency by increasing the target E_{b} /Nₒ of a predetermined number of forward link closed-loop fast power control groups prior to sampling of the target frequency; and after sampling of the target frequency, by adjusting the target E_{b} /Nₒ of the remaining power control groups in the frames.

14. The user station (102) of claim 8, wherein the means for configuring is configured:
to overcome the loss of forward link symbols during the sampling of the target frequency by increasing the target E_{b} /Nₒ of a predetermined number of forward link closed-loop fast power control groups prior to sampling of the target frequency; and after sampling the target frequency, by adjusting the target E_{b} /Nₒ of the remaining power control groups in the frames by comparing total symbol energy received in the current frame with the required energy per frame to achieve target frame error rate.

15. The user station (102) of claim 8, wherein the means for configuring is configured:
to overcome the loss of forward link symbols during the sampling of the target frequency by increasing the target E_{b} /Nₒ of a predetermined number of forward link closed-loop fast power control groups prior to the sampling of the target frequency; and after the sampling of the target frequency, by adjusting the target E_{b} /Nₒ of the remaining power control groups in the frames by comparing total symbol energy received in the current frame with the required energy per frame to achieve target frame error rate;
to increase the total transmission power on the reverse link prior to sampling of the target frequency to a maximum tolerable level as determined by the base station (106) and communicated to the user station (102) as part of the sampling command;
to ignore commands from the base station (106) to reduce the total transmission power during the sampling of the target frequency; and
to resume normal total transmission power control after the last frame boundary.

16. The method as claimed in any of the claims 1 to 3, wherein the configuring the user station (102) to overcome loss of forward link symbols comprises:
adjusting the amount of power allocated to frame symbols not impacted by the search of the target frequency, and increasing the amount of power allocated to the other frame symbols impacted by the search of the target frequency; and readjusting power allocation for all symbols to a normal level after the tuning (750) the user station (102) to the original frequency.

17. The method of claim 16, wherein the adjusting the amount of power allocated to the frame symbols not impacted by the search and increasing the amount of power allocated to the other frame symbols impacted by the search comprises:
increasing the target E_{b} /Nₒ of a predetermined number of forward link closed-loop fast power control groups prior to searching;
and after searching the target frequency, adjusting the target E_{b} /Nₒ of the remaining power control groups and the frames.

18. The method of claim 16, wherein adjusting the amount of power allocated to the frame symbols not impacted by the search and increasing the amount of power allocated to the other frame symbols impacted by the search comprises increasing the target E_{b} /Nₒ of a predetermined number of forward link closed-loop fast power control groups as a function of a Δ target dB; and wherein readjusting power allocation further comprises adjusting the target E_{b} /Nₒ of the remaining power control groups in the frames by comparing total symbol energy received in the current frame with the required energy per frame to achieve target frame error rate.

19. The method of claim 16, wherein adjusting the amount of power allocated to the frame symbols not impacted by the search and increasing the amount of power allocated to the other frame symbols impacted by the search, comprises increasing the target E_{b} /Nₒ of a predetermined number of forward link closed-loop fast power control groups as a function of a Δ target dB and increasing the reverse link total transmission power to a maximum tolerable level as determined by the base station (106) and communicated to the user station (102); and
wherein readjusting power allocation further comprises adjusting the target E_{b} /Nₒ of the remaining power control groups in the frames by comparing total symbol energy received in the current frame with the required energy per frame to achieve target frame error rate, and to resume normal reverse link total transmission power control after the last frame boundary.

20. The method of any of the claims 16 to 19, wherein processing the signal samples comprises:
determining pilot strength measurements; and
reporting pilot strength measurement to the base station (106).

21. The wireless communication user station (102) as claimed in claim 7,
wherein:
the means for transmitting signals comprise a transmitter;
wherein the means for receiving signals comprise a receiver; and
wherein a processor comprises the means for configuring the user station (102), the means for sampling a target frequency and the processing means.

22. The user station (102) of claim 21, wherein the processor is configured to overcome the loss of forward link symbols during the sampling of the target frequency by increasing the target E_{b} /Nₒ of a predetermined number of forward link closed-loop fast power control groups prior to sampling of the target frequency; and after sampling the target frequency, by adjusting the target E_{b} /Nₒ of the remaining power control groups in the frames by comparing total symbol energy received in the current frame with the required energy per frame to achieve target frame error rate.

23. The user station (102) of claim 21, wherein the processor is configured:
to overcome the loss of forward link symbols during the sampling of the target frequency by increasing the target E_{b} /Nₒ of a predetermined number of forward link closed-loop fast power control groups prior to sampling of the target frequency; and after sampling the target frequency, by adjusting the target E_{b} /Nₒ of the remaining power control groups in the frames by comparing total symbol energy received in the current frame with the required energy per frame to achieve target frame error rate; and
to increase the total transmission power on the reverse link while sampling the target frequency.

24. The user station (102) of claim 21, wherein the processor is configured:
to overcome the loss of forward link symbols during the sampling of the target frequency by increasing the target E_{b} /Nₒ of a predetermined number of forward link closed-loop fast power control groups prior to sampling of the target frequency; and after sampling the target frequency, by adjusting the target E_{b} /Nₒ of the remaining power control groups in the frames by comparing total symbol energy received in the current frame with the required
energy per frame to achieve target frame error rate;
to increase the total transmission power on the reverse link while sampling the target frequency; by to adjusting the total transmission power on the reverse link to a maximum tolerable level as determined by the base station (106) and communicated to the sampling means as part of the sampling command.

25. The user station (102) of claim 21, wherein the processor is configured:
to overcome the loss of forward link symbols during the sampling of the target frequency by increasing the target E_{b} /Nₒ of a predetermined number of forward link closed-loop fast power control groups prior to sampling of the target frequency;, and after sampling the target frequency, by adjusting the target E_{b} /Nₒ of the remaining power control groups in the frames by comparing total symbol energy received in the current frame with the required energy per frame to achieve target frame error rate;
to increase the total transmission power on the reverse link while sampling the target frequency by adjusting the total transmission power on the reverse link to a maximum tolerable level as determined by the base station (106) and communicated to the processor as part of the sampling command; and
to ignore commands from the base station (106) to reduce the total transmission-power during the sampling of the target frequency.

26. A wireless communication system (100), comprising:
means for transmitting a communication from a base station (106) that directs a selected user station (102) to perform a frequency search excursion to a target frequency;
means for receiving the communication at the selected user station (102) and tuning the selected user station (102) to the target frequency from forward and reverse communications at a first frequency;
means for configuring the user station (102) to overcome loss of forward link symbols during sampling of the target frequency by increasing a target ratio of energy per symbol E_{b}/Nₒ on the forward link power control allocated to other symbols impacted by the search of the user station (102);
means for collecting signal samples at the target frequency and storing the signal samples in memory in the selected user station (102);
means for tuning the selected user station (102) to the original frequency and resuming forward and reverse communications while processing the stored signal samples; and
means for transmitting the processed signal samples from the selected user station (102) to the base station (106).

27. The system as claimed in claim 26, wherein the means for transmitting the sample processing results to the base station (106) comprises:
means for transmitting pilot strength measurements to the base station (106).

28. The system of claim 26 or 27 wherein the means for configuring is configured to overcome the loss of forward link symbols during the sampling of the target frequency by increasing the target E_{b} /Nₒ of the forward link closed-loop fast power control of the user station (102).

29. The system of claim 26 or 27 wherein the means for configuring is further configured to increase the target E_{b} /Nₒ of a predetermined number of forward link closed-loop fast power control groups prior to tuning to the target frequency.

30. The system of claim 26 or 27 wherein the means for configuring is configured:
to overcome the loss of forward link symbols during the sampling of the target frequency by increasing the target E_{b} /Nₒ of the predetermined number of forward link closed-loop fast power control groups prior to tuning to the target frequency, and after tuning from the target frequency to adjust the target E_{b} /Nₒ of the remaining power control groups in the frames.

31. The system of claim 26 or 27 wherein the means for configuring is configured:
to overcome the loss of forward link symbols during the sampling of the target frequency by increasing the target E_{b} /Nₒ of a predetermined number of forward link closed-loop fast power control groups prior to tuning to the target frequency, and after tuning from the target frequency to adjust the target E_{b} /Nₒ of the remaining power control groups in the frames by comparing total symbol energy received in the current frames with a required energy per frame to achieve target frame error rate.

32. The system of claim 26 or 27 wherein the means for configuring is configured:
to overcome the loss of forward link symbols during the sampling of the target frequency by increasing the target E_{b} /Nₒ of a predetermined number of forward link closed-loop fast power control groups prior to tuning to the target frequency, and to adjust the target E_{b} /Nₒ of the remaining power control groups in the frames; and after tuning from the target frequency by comparing total symbol energy received in the current frame with the required energy per frame to achieve target frame error rate; and
to increase the total transmission power on the reverse link while sampling the target frequency.

33. The system of claim 26 or 27 wherein the means for configuring is configured:
to overcome the loss of forward link symbols during the sampling of the target frequency by increasing the target E_{b} /Nₒ of a predetermined number of forward link closed-loop fast power control groups prior to tuning to the target frequency, and after tuning from the target frequency by adjusting the target E_{b} /Nₒ of the remaining power control groups in the frames by comparing total symbol energy received in the current frame with the required energy per frame to achieve target frame error rate;
to increase the total transmission power on the reverse link while sampling the target frequency, by adjusting the total transmission power on the reverse link to a maximum tolerable level as determined by the base station (106) and communicated to the receiving means as part of the sampling command.

34. The system of claim 26 or 27 wherein the means for configuring is configured:
to overcome the loss of forward link symbols during sampling of the target frequency by increasing the target E_{b} /Nₒ of a predetermined number of forward link closed-loop fast power control groups prior to tuning to the target frequency, and after tuning from the target frequency by adjusting the target E_{b} /Nₒ of the remaining power control groups in the frames by comparing the total symbol energy received in the current frame with the required energy per frame to achieve target frame error rate;
to increase the total transmission power on the reverse link while sampling the target frequency, by adjusting the total transmission power on the reverse link to a maximum tolerable level as determined by the base station (106) and communicated to the signal sample collecting means as part of the sampling command, and
to ignore commands from the base station (106) to reduce the total transmission power during sampling of the target frequency.

## Patentansprüche

1. Verfahren zur Durchführung einer Frequenzsuchexkursion in einem drahtlosen Nachrichtensystem (100) mit einer Benutzerstation (102), die mit einer Basisstation (16) in Verbindung steht, wobei das Verfahren folgendes aufweist:
Empfang eines Frequenzänderungsbefehls an der Benutzerstation (102) zum Umschalten vom Empfang von Signalen mit einer Ursprungs- oder Originalfrequenz auf Empfangssignale auf einer Target- oder Zielfrequenz;
Konfigurierung der Benutzerstation (102) zur Überwindung des Verlustes von Vorwärtsverbindungssymbolen während des Tastens der Zielfrequenz durch Erhöhen (720) eines Soll- bzw. Zielverhältnisses von Energie pro Symbol E_{b}/Nₒ bei der Vorwärtsverbindungsleistungssteuerung und zwar zugewiesen zu anderen Symbolen die durch die Suche der Benutzerstation (102) beeinträchtigt sind;
Abstimmen (730) der Benutzerstation (102) auf die Zielfrequenz und Sammeln und Speichern (740) von Signaltastungen von der Target- oder Zielfrequenz;
Abstimmen (750) der Benutzerstation (102) auf die Ursprungs- oder Originalfrequenz;
Verarbeiten (760) der gespeicherten Tastwerte; und
Senden (770) der Tastverarbeitungsresultate an die Basisstation (106).

2. Verfahren nach Anspruch 1, wobei ferner folgendes vorgesehen ist:
Übertragen bzw. Senden (710) eines Frequenzänderungsbefehls von einer Basisstation (106) vor dem Empfangsschritt;
wobei der Schritt des Empfangens folgendes aufweist:
Empfang des Frequenzänderungsbefehls an der Benutzerstation (102).

3. Verfahren nach Anspruch 1 oder 2, wobei das Senden der Tastverarbeitungsergebnisse an eine Basisstation (106) folgendes aufweist:
Senden von Pilotstärkemessungen an eine Basisstation (106).

4. Verfahren nach Anspruch 2 oder 3, wobei das Senden (710) eines Frequenzänderungsbefehls von der Basisstation ferner folgendes aufweist:
Senden einer maximal tolerierbaren Erhöhung der Rückwärtsverbindungsgesamtsendeleistung von der Benutzerstation (102);
wobei die Konfigurierung der Benutzerstation (102) zur Überwindung des Verlustes von Vorwärtsverbindungssymbolen ferner folgendes aufweist:
Bestimmen der Dauer der Suchexkursionszeit, Bestimmen der erforderlichen Anzahl von Leistungssteuergruppen und Vorwärts- und Rückwärtsverbindungen beeinflusst durch die Suchexkursion, Erhöhen des Zieles E_{b}/Nₒ der Vorwärtsverbindungs-Schnellleistungsregelung in den beeinflussten Leistungsregelgruppen; und
Erhöhen der Rückwärtsverbindungsgesamtsendeleistung an der Benutzerstation (102) auf einen Pegel, der nicht größer ist als die maximal tolerierbare Erhöhung vor der Suchexkursion; und
wobei das Abstimmen (750) der Benutzerstation (102) auf die Originalfrequenz ferner folgendes aufweist:
Einstellen des Ziels E_{b}/Nₒ der Vorwärtsverbindungs-Leistungsschnellregelung für die verbleibenden Leistungssteuergruppen und Reduzieren des Rückwärtsverbindungs-Gesamtsendeleistungspegels an der Benutzerstation (102). und

5. Verfahren nach einem der Ansprüche 1 bis 3, wobei die Konfigurierung der Benutzerstation (102) zur Überwindung des Verlustes der Vorwärtsverbindungssymbole ferner folgendes aufweist:
Erhöhen der Rückwärtsverbindungs-Gesamtsendeleistung an der Benutzerstation (102);
wobei das Abstimmen (750) der Benutzerstation (102) auf die Originalfrequenz ferner folgendes aufweist:
Verringerung der Rückwärtsverbindungs-Gesamtsendeleistung und Einstellen des Ziels E_{b}/Nₒ der Benutzerstation (102)auf die Vorwärtsverbindungs-Schnellleistungsregelung.

6. Verfahren nach einem der Ansprüche 1 bis 3, wobei die Konfigurierung der Benutzerstation (102) zur Überwindung des Verlustes von Vorwärtsverbindungssymbolen ferner folgendes aufweist:
Erhöhen des Benutzerstations(102)Ziels E_{b}/Nₒ der schnellen Vorwärtsverbindungsleistungsregelung durch eine Größe, die eine Funktion der Suchexkursionszeit ist, um zu bewirken, dass die Vorwärtsverbindungsleistung ansteigt, und zwar vor der Benutzerstations(102)Abstimmung (730) auf die Zielfrequenz und Erhöhen der Rückwärtsverbindungs-Gesamtsendeleistung auf einen Pegel bestimmt durch die Basisstation (106) und Übertragen in dem Frequenzänderungsbefehl; und
wobei die Abstimmung (750) der Benutzerstation (102) auf die Originalfrequenz ferner folgendes aufweist:
Einstellung des Ziels E_{b}/Nₒ der verbleibenden Leistungssteuergruppen auf einen empfangende Rahmen; und
Reduzieren der Rückwärtsverbindungs-Gesamtsendeleistung der Benutzerstation (102).

7. Verfahren nach einem der Ansprüche 1 bis 3, wobei die Konfigurierung der Benutzerstation (102) zur Überwindung des Verlustes der Vorwärtsverbindungssymbole folgendes aufweist:
Erhöhen der Leistungsgröße, die anderen Symbolen in einem Rahmen zugewiesen ist, und zwar betroffen durch Frequenzsuchexkursion zur Minimierung des Effektes des Verlustes der vorwärts- und Rückwärtsverbindungssymbole während der Frequenzsuchexkursion.

8. Eine drahtlose Benutzerstation (102) für den Austausch von Nachrichten mit einer Basisstation (106), wobei die Benutzerstation (102) folgendes aufweist:
Mittel zum Übertragen von Signalen (210);
Mittel zum Empfang von Signalen einschließlich Mitteln zum Abstimmen auf ausgewählte Signalfrequenzen (204);
Mittel zur Konfigurierung der Benutzerstation (102) zur Überwindung des Verlustes von Vorwärtsverbindungssymbolen während des Tastens einer Target- oder Zielfrequenz durch Erhöhen (720) eines Target- oder Zielverhältnisses von Energie pro Symbol E_{b}/Nₒ auf einer Vorwärtsverbindungsleistungssteuerung zugewiesen zu den anderen Symbolen, die durch die Suche der Benutzerstation (102) betroffen sind;
Mittel zum Tasten einer Ziel- oder Targetfrequenz ansprechend auf einen Frequenztastungsbefehl von einer Basisstation (106), wobei die Tastmittel Mittel zum Speichern der Zielfrequenztastungen aufweisen, wenn der Empfänger auf die Zielfrequenz abgestimmt ist; und
Mittel zur Verarbeitung der Zielfrequenztastungen, wobei die Verarbeitungsmittel derart konfiguriert sind, dass sie die Zielfrequenztastungen verarbeiten, und zwar nachdem die Empfangsmittel die Nachrichtenübertragung auf einer Originalfrequenz wieder aufgenommen haben.

9. Benutzerstation (102) nach Anspruch 8, wobei die Mittel zur Konfigurierung konfiguriert sind, um den Verlust der Vorwärts- und Rückwärtssymbole der laufenden bzw. aktuellen Vorwärts- und Rückwärtsverbindungsrahmen zu minimieren, und zwar durch Vergrößern der den anderen Symbolen des Rahmens zugewiesenen Sendeleistung, und zwar betroffen durch die Tastung der Zielfrequenz und durch Einstellen der Leistungsgröße, der den Symbolen zugewiesen ist, die durch die Tastung der Zielfrequenz nicht betroffen sind.

10. Benutzerstation (102) nach Anspruch 8, wobei die Mittel zur Konfigurierung wie folgt konfiguriert sind:
zur Minimierung des Verlustes der Vorwärts- und Rückwärtssymbole der laufenden Vorwärts- und Rückwärtsverbindungsrahmen ist folgendes vorgesehen:
Erhöhung der Leistungsgröße, die anderen Symbolen des Rahmens zugewiesen ist, und zwar betroffen durch die Suchexkursion und Einstellen als einer Funktion der Größe der Tastzeit, die Leistungsgröße, die den Symbolen zugewiesen ist, die nicht durch die Suchexkursion betroffen sind.

11. Benutzerstation (102) nach Anspruch 8, wobei die Mittel zum Konfigurieren wie folgt konfiguriert sind:
zur Überwindung des Verlustes der Vorwärtsverbindungssymbole während des Tastens der Zielfrequenz ist folgendes vorgesehen:
Erhöhung des Ziels E_{b}/Nₒ für die Vorwärtsverbindungs-Schnellleistungsregelung der Benutzerstation (102).

12. Benutzerstation (102) nach Anspruch 8, wobei die Mittel zur Konfigurierung konfiguriert sind
zur Überwindung des Verlustes der Vorwärtsverbindungssymbole während des Tastens der Zielfrequenz durch Erhöhen des Ziels E_{b}/Nₒ einer vorbestimmten Anzahl von Vorwärtsverbindungs-Schnellregelgruppen vor dem Tasten der Zielfrequenz.

13. Benutzerstation (102) nach Anspruch 8, wobei die Konfigurierungsmittel konfiguriert sind zur Überwindung des Verlustes der Vorwärtsverbindungssymbole während des Tastens der Zielfrequenz durch Erhöhen des Ziels E_{b}/Nₒ einer vorbestimmten Anzahl von Vorwärtsverbindungs-Schnellleistungsregelgruppen vor dem Tasten der Zielfrequenz; und nach dem Tasten der Zielfrequenz durch Einstellen des Ziels E_{b}/Nₒ der verbleibenden Leistungssteuergruppen in den Rahmen.

14. Benutzerstation (102) nach Anspruch 8, wobei die Konfigurierungsmittel zur Überwindung des Verlustes der Vorwärtsverbindungssymbole konfiguriert sind, und zwar während des Tastens der Zielfrequenz durch Erhöhen des Ziels E_{b}/Nₒ einer vorbestimmten Anzahl von Vorwärtsverbindungs-Schnellleistungsregelgruppen vor dem Tasten der Zielfrequenz; und nach dem Tasten der Zielfrequenz durch Einstellen des Ziels E_{b}/Nₒ der verbleibenden Leistungssteuergruppen der Rahmen durch Vergleich der im laufenden Rahmen empfangenen Symbolenergie mit der erforderlichen Energie pro Rahmen, um die Zielrahmenfehlerrate zu erreichen.

15. Benutzerstation (102) nach Anspruch 8, wobei die Konfigurierungsmittel konfiguriert sind zur Überwindung des Verlustes der Vorwärtsverbindungssymbole während des Tastens der Zielfrequenz durch Erhöhen des Ziels E_{b}/Nₒ einer vorbestimmten Anzahl von Vorwärtsverbindungs-Schnellleistungsregelgruppen vor dem Tasten der Zielfrequenz; und nach dem Tasten der Zielfrequenz durch Einstellen des Ziels E_{b}/Nₒ der verbleibenden Leistungssteuergruppen der Rahmen durch Vergleichen der Gesamtsymbolenergie empfangen in dem laufenden Rahmen mit der erforderlichen Energie pro Rahmen zur Erreichung der Zielrahmenfehlerrate;
ferner um die Gesamtsendeleistung auf der Rückwärtsverbindung zu erhöhen, und zwar vor dem Tasten der Zielfrequenz auf einen maximal tolerierbaren Pegel bestimmt durch die Basisstation (106) und Übertragen an die Benutzerstation (102) als Teil des Tastbefehls;
zur Ignorierung der Befehle von der Basisstation (106) zum Reduzieren der Gesamtsendeleistung während des Tastens der Zielfrequenz; und
zur Wideraufnahme der normalen Gesamtsendeleistungsregelung nach der letzten Rahmengrenze.

16. Verfahren nach einem der Ansprüche 1 bis 3, wobei die Konfigurierung der Benutzerstation (102) zur Überwindung des Verlustes der Vorwärtsverbindungssymbole folgendes aufweist:
Einstellung der Leistungsgröße, die den nicht betroffen Rahmensymbolen zugewiesen ist, und zwar durch die Suche der Zielfrequenz und Erhöhen der Leistungsgröße, die den anderen Rahmensymbolen betroffen durch die Suche der Zielfrequenz zugewiesen ist; und
Wiedereinstellen der Leistungszuweisung für sämtliche Symbole auf einen normalen Pegel nach dem Abstimmen (750) der Benutzerstation (102) auf die Originalfrequenz.

17. Verfahren nach Anspruch 16, wobei das Einstellen der Leistungsgröße, die den durch die Suche nicht betroffen Rahmensymbolen zugewiesen ist, und das Erhöhen der Leistungsgröße, die den anderen Rahmensymbolen betroffen durch die Suche zugewiesen ist, folgendes aufweist:
Erhöhen des Ziels E_{b}/Nₒ einer vorbestimmten Zahl von Vorwärtsverbindungs-Schnellleistungssteuergruppen vor dem Suchen;
und nach dem Suchen der Zielfrequenz, Einstellen des Ziels E_{b}/Nₒ der verbleibenden Leistungssteuergruppen und der Rahmen.

18. Verfahren nach Anspruch 16, wobei das Einstellen der Leistungsmenge, das den nicht durch die Suche betroffenen Rahmensymbole, und das Erhöhen der Leistungsmenge für die anderen Symbole betroffen durch die Suche, folgendes aufweist:
Vergrößern des Ziels E_{b}/Nₒ einer vorbestimmten Anzahl von Vorwärtsverbindungs-Schnellleistungsregelgruppen als eine Funktion eines Δ Ziels dB; und wobei die Wiedereinstellung der Leistungszuweisung ferner das Einstellen des Ziels E_{b}/Nₒ der verbleibenden Leistungssteuergruppen in dem Rahmen vorsieht, und zwar durch Vergleichen der Gesamtsymbolenergie empfangen in dem laufenden Rahmen mit der erforderlichen Energie pro Rahmen zum Erreichen der Zielrahmenfehlerrate.

19. Verfahren nach Anspruch 16, wobei die Einstellung der den nicht durch die Suche betroffenen Rahmensymbolen zugewiesenen Leistungsgröße und die Vergrößerung der den anderen durch die Suche betroffenen Rahmensymbolen zugewiesenen Leistungsgröße folgendes aufweist:
Erhöhen des Ziels E_{b}/Nₒ einer vorbestimmten Anzahl von Vorwärtsverbindungs-Schnellleistungsregelgruppen als eine Funktion eines Δ Ziels dB und Erhöhen der Rückwärtsverbindungs-Gesamtsendeleistung auf einen maximal tolerierbaren Pegel bestimmt durch die Basisstation (106) und übermittelt an die Nutzerstation (102); und
wobei die Wiedereinstellung der Leistungszuweisung ferner folgendes aufweist:
Einstellen des Ziels E_{b}/Nₒ der verbliebenen Leistungssteuergruppen in den Rahmen durch Vergleichen der Gesamtsymbolenergie empfangen in dem laufenden Rahmen mit der erforderlichen Energie pro Rahmen, um eine Zielrahmenfehlerrate zu erreichen und um die normale Rückwärtsverbindungs-Gesamtsendeleistungssteuerung wieder aufzunehmen nach der letzten Rahmengrenze.

20. Verfahren nach einem der Ansprüche 16 bis 19, wobei die Verarbeitung der Signaltastungen folgendes aufweist:
Bestimmung von Pilotstärkemessungen; und
Berichten der Pilotstärkemessung an die Basisstation (106).

21. Drahtlose Nachrichtenbenutzerstation (102), wobei nach Anspruch 7 folgendes vorgesehen ist:
die Mittel zur Sendung von Signalen umfassen einen Sender;
wobei die Mittel zum Empfang der Signale einen Empfänger aufweisen;
und wobei ferner ein Prozessor die Mittel zur Konfigurierung der Benutzerstation (102), die Mittel zum Tasten einer Zielfrequenz und die Verarbeitungsmittel umfasst.

22. Benutzerstation (102) nach Anspruch 21, wobei der Prozessor derart konfiguriert ist, dass er den Verlust an Vorwärtsverbindungssymbolen während des Tastens der Zielfrequenz überwindet, und zwar durch Erhöhen des Ziels E_{b}/Nₒ einer vorbestimmten Anzahl von Vorwärtsverbindungs-Schnellleistungsregelgruppen vor dem Tasten der Zielfrequenz; und nach dem Tasten der Zielfrequenz durch Einstellen des Ziels E_{b}/Nₒ der verbleibenden Leistungsregelgruppen in den Rahmen, und zwar durch Vergleich der Gesamtsymbolenergie empfangen in dem laufenden Rahmen mit der erforderlichen Energie pro Rahmen, um die Zielrahmenfehlerrate zu erreichen.

23. Benutzerstation (102) nach Anspruch 21, wobei der Prozessor derart konfiguriert ist, um den Verlust der Vorwärtsverbindungssymbole zu überwinden, und zwar während des Tastens der Zielfrequenz durch Erhöhen des Ziels E_{b}/Nₒ einer vorbestimmten Anzahl von Vorwärtsverbindungs-Schnellleistungsregelgruppen vor dem Tasten der Zielfrequenz; nach dem Tasten der Zielfrequenz durch Einstellen des Ziels E_{b}/Nₒ der verbleibenden Leistungsregelgruppen in den Rahmen, und zwar durch Vergleichen der Gesamtsymbolenergie empfangen in dem laufenden Rahmen mit der erforderlichen Energie pro Rahmen, um die Zielrahmenfehlerrate zu erreichen; und
zur Vergrösserung der Gesamtsendeleistung auf der Rückwärtsverbindung während des Tastens der Zielfrequenz.

24. Benutzerstation (102) nach Anspruch 21, wobei der Prozessor konfiguriert ist, um
den Verlust der Vorwärtsverbindungssymbole während des Tastens der Zielfrequenz durch Erhöhen des Ziels E_{b}/Nₒ einer vorbestimmten Anzahl von Vorwärtsverbindungs-Schnellleistungsregelgruppen vor dem Tasten der Zielfrequenz zu überwinden; und nach dem Tasten der Zielfrequenz durch Einstellen des Ziels E_{b}/Nₒ der verbleibenden Leistungssteuergruppen in den Rahmen durch Vergleichen der Gesamtsymbolenergie empfangen in dem laufenden Rahmen mit der erforderlichen Energie pro Rahmen zum Erreichen der Zielrahmenfehlerrate;
zur Erhöhung der Gesamtsendeleistung auf der Rückwärtsverbindung während des Tastens der Zielfrequenz; und zwar durch Einstellen der Gesamtsendeleistung auf der Rückwärtsverbindung auf einen maximal tolerierbaren Pegel bestimmt durch die Basisstation (106) und Übertragen zu den Tastmitteln als Teil des Tastbefehls.

25. Benutzerstation (102) nach Anspruch 21, wobei der Prozessor konfiguriert ist um
den Verlust der Vorwärtsverbindungssymbole während des Tastens der Zielfrequenz durch Erhöhen des Ziels E_{b}/Nₒ einer vorbestimmten Anzahl von Vorwärtsverbindungs-Schnellleistungsregelgruppen vor dem Tasten der Zielfrequenz zu überwinden; und nach dem Tasten der Zielfrequenz durch Einstellen des Ziels E_{b}/Nₒ der verbleibenden Leistungssteuergruppen in den Rahmen durch Vergleichen der Gesamtsymbolenergie empfangen in dem laufenden Rahmen mit der erforderlichen Energie pro Rahmen zum Erreichen der Zielrahmenfehlerrate; und
zum Erhöhen der Gesamtsendeleistung auf der Rückwärtsverbindung während des Tastens der Zielfrequenz durch Einstellen der Gesamtsendeleistung auf der Rückwärtsverbindung auf einen maximal tolerierbaren Pegel bestimmt durch die Basisstation (106) und übertragen zum Prozessor als Teil des Tastbefehls; und
Ignorieren der Befehle von der Basisstation (106) zum Reduzieren der Gesamtsendeleistung während des Tastens der Zielfrequenz.

26. Drahtloses Nachrichtensystem (100), welches folgendes aufweist:
Mittel zum Senden einer Nachricht von der Basisstation (106), die eine ausgewählte Benutzerstation (102) anweist, eine Frequenzsuchexkursion auf eine Zielfrequenz durchzuführen;
Mittel zum Empfang der Nachricht an der ausgewählten Benutzerstation (102) und Abstimmen der ausgewählten Benutzerstation (102) auf die Zielfrequenz von Vorwärts- und Rückwärtsverbindungen auf einer ersten Frequenz;
Mittel zum Konfigurieren der Benutzerstation (102) zur Überwindung des Verlustes von Vorwärtsverbindungssymbolen während des Tastens der Zielfrequenz durch Erhöhen eines Zielverhältnisses der Energie pro Symbol E_{b}/Nₒ an der Vorwärtsverbindungsleistungssteuerung zugewiesen zu den anderen Symbolen betroffen durch die Suche der Benutzerstation (102);
Mittel zum Sammeln von Signaltastungen auf der Zielfrequenz und Speichern der Signaltastungen in einem Speicher in der ausgewählten Benutzerstation (102);
Mittel zum Abstimmen der ausgewählten Benutzerstation (102) auf die Originalfrequenz und Wiederaufnahme der Vorwärts- und Rückwärtsverbindungen während der Verarbeitung der gespeicherten Signaltastungen; und
Mittel zum Senden der verarbeiteten Signaltastungen von der ausgewählten Benutzerstation (102) an die Basisstation (106).

27. System nach Anspruch 26, wobei die Mittel zum Senden der Tastverarbeitungsresultate zur Basisstation (106) folgendes aufweisen:
Mittel zum Senden von Pilotstärkemessungen an die Basisstation (106).

28. System nach Anspruch 26 oder 27, wobei die Mittel zum Konfigurieren derart konfiguriert sind, dass der Verlust der Vorwärtsverbindungssymbole während des Tastens der Zielfrequenz durch Erhöhen des Ziels E_{b}/Nₒ der Vorwärtsverbindungs-Schnellleistungsregelung der Basisstation (102) überwunden wird.

29. System nach Anspruch 26 oder 27, wobei die Mittel zum Konfigurieren ferner derart konfiguriert sind, dass das Ziel E_{b}/Nₒ einer vorbestimmten Anzahl von Vorwärtsverbindungs-Schnellleistungsregelgruppen erhöht wird, und zwar vor der Abstimmung auf die Zielfrequenz.

30. System nach Anspruch 26 oder 27, wobei die Mittel zum Konfigurieren derart konfiguriert sind, dass der Verlust der Vorwärtsverbindungssymbole während des Tastens der Zielfrequenz überwunden wird, und zwar durch Erhöhen des Ziels E_{b}/Nₒ der vorbestimmten Anzahl von Vorwärtsverbindungs-Schnellieistungsregelgruppen vor dem Abstimmen der Zielfrequenz und nach dem Abstimmen von der Zielfrequenz zur Einstellung des Ziels E_{b}/Nₒ der verbleibenden Leistungsregelgruppen in den Rahmen.

31. System nach Anspruch 26 oder 27, wobei die Mittel zum Konfigurieren derart konfiguriert sind, dass der Verlust der Vorwärtsverbindungssymbole überwunden wird während des Tastens der Zielfrequenz durch Erhöhen des Ziels E_{b}/Nₒ einer vorbestimmen Anzahl von Vorwärtsverbindungs-Schnellleistungsregelgruppen vor dem Abstimmen auf die Zielfrequenz, und nach dem Abstimmen von der Zielfrequenz zur Einstellung des Ziels E_{b}/Nₒ der verbleibenden Leistungssteuergruppen in den Rahmen durch Vergleichen der Gesamtsymbolenergie empfangen in den laufenden Rahmen mit einer erforderlichen Energie pro Rahmen zum Erreichen einer Zielrahmenfehlerrate.

32. System nach Anspruch 26 oder 27, wobei die Mittel zum Konfigurieren derart konfiguriert sind, zu Überwindung des Verlustes der Vorwärtsverbindungssymbole während des Tastens der Zielfrequenz durch Erhöhen des Ziels E_{b}/Nₒ einer vorbestimmten Anzahl von Vorwärtsverbindungs-Schnellleistungsregelgruppen vor dem Abstimmen auf die Zielfrequenz und zur Einstellung es Ziels E_{b}/Nₒ der verbleibenden Leistungssteuergruppen in den Rahmen; und nach dem Abstimmen von der Zielfrequenz durch Vergleichen der Gesamtsymbolenergie empfangen in dem laufenden Rahmen mit der erforderlichen Energie pro Rahmen zum Erreichen der Zielrahmenfehlerrate; und
zur Vergrößerung der Gesamtsendeleistung auf der Rückwärtsverbindung während des Tastens der Zielfrequenz.

33. System nach Anspruch 26 oder 27, wobei die Mittel zum Konfigurieren derart konfiguriert sind, dass der Verlust der Vorwärtsverbindungssymbole überwunden wird während des Tastens der Zielfrequenz durch Erhöhen des Ziels E_{b}/Nₒ einer vorbestimmten Anzahl von Vorwärtsverbindungs-Schnellleistungsregelgruppen vor dem Abstimmen auf die Zielfrequenz, und nach dem Abstimmen von der Zielfrequenz durch Einstellen des Ziels E_{b}/Nₒ der verbleibenden Leistungssteuergruppen in den Rahmen durch Vergleichen der Gesamtsymbolenergie empfangen in dem laufenden Rahmen mit der erforderlichen Energie pro Rahmen zum Erreichen einer Zielrahmenfehlerrate;
zur Erhöhung der Gesamtsendeleistung auf der Rückwärtsverbindung während des Tastens der Zielfrequenz, und zwar durch Einstellen der Gesamtsendeleistung auf der Rückwärtsverbindung auf einen maximal tolerierbaren Pegel bestimmt durch die Basisstation (106) und Übertragen an die Empfangsmittel als Teil des Tastbefehls.

34. System nach Anspruch 26 oder 27, wobei die Mittel zum Konfigurieren derart konfiguriert sind, dass
der Verlust der Vorwärtsverbindungssymbole während des Tastens der Zielfrequenz überwunden wird durch Erhöhen des Ziels E_{b}/Nₒ einer vorbestimmten Anzahl von Vorwärtsverbindungs-Schnellleistungsregelgruppen vor dem Abstimmen auf die Zielfrequenz und
nach dem Abstimmen von der Zielfrequenz durch Einstellen des Ziels E_{b}/Nₒ der verbleibenden Leistungssteuergruppen in den Rahmen durch Vergleichen der Gesamtsymbolenergie empfangen in dem laufenden Rahmen mit der erforderlichen Energie pro Rahmen zum Erreichen der Zielrahmenfehlerrate;
zum Erhöhen der Gesamtsendeleistung auf der Rückwärtsverbindung während des Tastens der Zielfrequenz durch Einstellen der Gesamtsendeleistung auf der Rückwärtsverbindung auf einen maximal tolerierbaren Pegel bestimmt durch die Basisstation (106) und Übertragen zu den Signaltastsammelmitteln als Teil des Tastbefehls; und
zum Ignorieren von Befehlen von der Basisstation (106) zum Reduzieren der Gesamtsendeleistung während des Tastens der Zielfrequenz.

## Revendications

1. Procédé pour réaliser une excursion de recherche de fréquence dans un système de communication sans fil (100) comprenant une station d'utilisateur (102) communiquant avec une station de base (106), le procédé comprenant :
recevoir une commande de changement de fréquence au niveau de la station d'utilisateur (102) pour commuter de la réception de signaux sur une fréquence initiale à la réception de signaux sur une fréquence cible ;
configurer la station d'utilisateur (102) pour pallier la perte de symboles en liaison directe pendant l'échantillonnage de la fréquence cible en augmentant (720) un rapport cible d'énergie par symbole E_{b}/N₀ sur la commande de puissance en liaison directe allouée aux autres symboles affectés par la recherche de la station d'utilisateur (102) ;
accorder (730) la station d'utilisateur (102) sur la fréquence cible et recueillir et mémoriser (740) les échantillons de signal à partir de la fréquence cible ;
accorder (750) la station d'utilisateur (102) sur la fréquence initiale ;
traiter (760) les échantillons mémorisés ; et
émettre (770) les résultats du traitement des échantillons vers une station de base (106).

2. Procédé selon la revendication 1, comprenant en outre :
émettre (710) une commande de changement de fréquence à partir d'une station de base (106) avant l'étape de réception ; et
dans lequel l'étape de réception comprend la réception de la commande de changement de fréquence au niveau de la station d'utilisateur (102).

3. Procédé selon la revendication 1 ou 2, dans lequel l'émission de résultats du traitement d'échantillons vers une station de base (106) comprend l'émission de mesures d'intensité de pilote vers une station de base (106).

4. Procédé selon la revendication 2 ou 3, dans lequel l'émission (710) d'une commande de changement de fréquence à partir de la station de base comprend en outre l'émission d'une augmentation maximum tolérable de la puissance d'émission en liaison inverse à partir de la station d'utilisateur (102) ; et
dans lequel la configuration de la station d'utilisateur (102) pour pallier la perte de symboles en liaison directe comprend en outre la détermination de la durée de l'excursion de recherche, la détermination du nombre requis de groupes de commande de puissance et de liaisons directes et inverses affectées par l'excursion de recherche, l'augmentation de la cible E_{b}/N₀ de la commande de puissance rapide en boucle fermée en liaison directe dans les groupes de commande de puissance affectés ; et l'augmentation de la puissance d'émission totale en liaison inverse au niveau de la station d'utilisateur (102) à un niveau non supérieur à l'augmentation maximum tolérable avant l'excursion de recherche ; et
dans lequel l'accord (750) de la station d'utilisateur (102) sur la fréquence initiale comprend en outre le réglage de la cible E_{b}/N₀ de la commande de puissance rapide en boucle fermée en liaison directe pour les groupes de commande de puissance restants et la réduction du niveau de puissance d'émission totale en liaison inverse au niveau de la station d'utilisateur (102).

5. Procédé selon l'une quelconque des revendications 1 à 3, dans lequel
la configuration de la station d'utilisateur (102) pour pallier la perte de symboles en liaison directe comprend en outre l'augmentation de la puissance d'émission totale en liaison inverse au niveau de la station d'utilisateur (102) ; et
l'accord (750) de la station d'utilisateur (102) sur la fréquence initiale comprend en outre la diminution de la puissance d'émission totale en liaison inverse et le réglage de la cible E_{b}/N₀ de station d'utilisateur (102) de la commande de puissance rapide en boucle fermée en liaison directe.

6. Procédé selon l'une quelconque des revendications 1 à 3, dans lequel
la configuration de la station d'utilisateur (102) pour pallier la perte de symboles en liaison directe comprend en outre l'augmentation de la cible E_{b}/N₀ de station d'utilisateur (102) de la commande de puissance rapide en boucle fermée en liaison directe d'une quantité qui est fonction de la durée d'excursion de recherche pour amener la puissance en liaison directe à augmenter avant que la station d'utilisateur (102) ne s'accorde (730) sur la fréquence cible, et l'augmentation de la puissance totale en liaison inverse à un niveau déterminé par la station de base (106) et communiqué dans la commande de changement de fréquence ; et
l'accord (750) de la station d'utilisateur (102) sur la fréquence initiale comprend en outre le réglage de la cible E_{b}/N₀ des groupes de commande de puissance restants d'une trame reçue ; et la réduction de la puissance d'émission totale en liaison inverse de la station d'utilisateur (102).

7. Procédé selon l'une quelconque des revendications 1 à 3, dans lequel la configuration de la station d'utilisateur (102) pour pallier la perte de symboles en liaison directe comprend l'augmentation de la quantité de puissance allouée aux autres symboles d'une trame affectée par l'excursion de recherche de fréquence pour minimiser l'effet de la perte de symboles en liaisons directe et inverse pendant l'excursion de recherche de fréquence.

8. Station d'utilisateur (102) de communication sans fil pour échanger des communications avec une station de base (106), la station d'utilisateur (102) comprenant :
des moyens d'émission de signaux (210) ;
des moyens de réception de signaux incluant des moyens d'accord sur des fréquences de signal sélectionnées (204) ;
des moyens de configuration de la station d'utilisateur (102) pour pallier la perte de symboles en liaison directe pendant l'échantillonnage d'une fréquence cible en augmentant (720) un rapport cible d'énergie par symbole E_{b}/N₀ sur une commande de puissance en liaison directe allouée à d'autres symboles affectés par la recherche de la station d'utilisateur (102) ;
des moyens d'échantillonnage d'une fréquence cible en réponse à une commande d'échantillonnage de fréquence de la station de base (106), les moyens d'échantillonnage comprenant des moyens pour mémoriser les échantillons de fréquence cible quand le récepteur est accordé sur la fréquence cible ; et
des moyens de traitement des échantillons de fréquence cible, les moyens de traitement étant configurés pour traiter les échantillons de fréquence cible après que les moyens de réception ont repris des communications sur une fréquence initiale.

9. Station d'utilisateur (102) selon la revendication 8, dans laquelle les moyens de configuration sont configurés pour minimiser la perte de symboles directs et inverses des trames courantes en liaison directe et inverse en augmentant la quantité de puissance allouée aux autres symboles de la trame affectés par l'échantillonnage de la fréquence cible et en réglant la quantité de puissance allouée aux symboles non affectés par l'échantillonnage de la fréquence cible.

10. Station d'utilisateur (102) selon la revendication 8, dans laquelle les moyens de configuration sont configurés pour minimiser la perte de symboles directs et inverses sur les trames courantes en liaison directe et inverse en augmentant la quantité de puissance allouée aux autres symboles des trames affectées par l'excursion de recherche et en réglant, en fonction de la durée d'échantillonnage, la puissance allouée aux symboles non affectés par l'excursion de recherche.

11. Station d'utilisateur (102) selon la revendication 8, dans laquelle les moyens de configuration sont configurés pour pallier la perte de symboles en liaison directe pendant un échantillonnage à fréquence cible en augmentant la cible E_{b}/N₀ de la commande de puissance rapide en boucle fermée en liaison directe de la station d'utilisateur (102).

12. Station d'utilisateur (102) selon la revendication 8, dans laquelle les moyens de configuration sont configurés pour pallier la perte de symboles en liaison directe pendant l'échantillonnage de fréquence cible en augmentant la cible E_{b}/N₀ d'un nombre prédéterminé de groupes de commande de puissance rapide en boucle fermée en liaison directe avant l'échantillonnage de la fréquence cible.

13. Station d'utilisateur (102) selon la revendication 8, dans laquelle les moyens de configuration sont configurés pour pallier la perte de symboles en liaison directe pendant l'échantillonnage de la fréquence cible en augmentant la cible E_{b}/N₀ d'une quantité prédéterminée de groupes de commande de puissance rapide en boucle fermée en liaison directe avant l'échantillonnage de la fréquence cible ; et, après l'échantillonnage de la fréquence cible, en réglant la cible E_{b}/N₀ des groupes de commande de puissance restants dans les trames.

14. Station d'utilisateur (102) selon la revendication 8, dans laquelle les moyens de configuration sont configurés pour pallier la perte de symboles en liaison directe pendant l'échantillonnage de la fréquence cible en augmentant la cible E_{b}/N₀ d'un nombre prédéterminé de groupes de commande de puissance rapide en boucle fermée en liaison directe avant l'échantillonnage de la fréquence cible ; et, après échantillonnage de la fréquence cible, en réglant la cible E_{b}/N₀ des groupes de commande de puissance restants dans les trames en comparant l'énergie de symbole totale reçue dans la trame courante à l'énergie requise par trame pour obtenir un taux d'erreur de trame cible.

15. Station d'utilisateur (102) selon la revendication 8, dans laquelle les moyens de configuration sont configurés pour :
pallier la perte de symboles en liaison directe pendant l'échantillonnage de la fréquence cible en augmentant la cible E_{b}/N₀ d'un nombre prédéterminé de groupes de commande de puissance rapide en boucle fermée en liaison directe avant l'échantillonnage de la fréquence cible ; et, après l'échantillonnage de la fréquence cible, en réglant la cible E_{b}/N₀ des groupes de commande de puissance restants dans les trames en comparant l'énergie de symbole totale reçue dans la trame courante à l'énergie requise par trame pour obtenir le taux d'erreur de trame cible ;
augmenter la puissance d'émission totale sur la liaison inverse avant l'échantillonnage de la fréquence cible à un niveau maximum tolérable tel que déterminé par les stations de base (106) et communiqué à la station d'utilisateur (102) en tant que partie de la commande d'échantillonnage ;
ignorer les ordres en provenance de la station de base (106) de réduction de la puissance d'émission totale pendant l'échantillonnage de la fréquence cible ; et
reprendre la commande de puissance d'émission totale normale après la dernière limite de trame.

16. Procédé selon l'une quelconque des revendications 1 à 3, dans lequel la configuration de la station d'utilisateur (102) pour pallier la perte de symboles en liaison directe comprend le réglage de la quantité de puissance allouée aux symboles de trame non affectés par la recherche de la fréquence cible, et l'augmentation de la quantité de puissance allouée aux autres symboles de trame affectés par la recherche de la fréquence cible ; et le réajustement de l'allocation de puissance de tous les symboles à un niveau normal après l'accord (750) de la station d'utilisateur (102) sur la fréquence initiale.

17. Procédé selon la revendication 16, dans lequel le réglage de la puissance allouée aux symboles de trame non affectés par la recherche et l'augmentation de la puissance allouée aux autres symboles de trame affectés par la recherche comprenant :
l'augmentation de la cible E_{b}/N₀ d'un nombre prédéterminé de groupes de commande de puissance rapide en boucle fermée en liaison directe avant la recherche ; et
après la recherche de la fréquence cible, le réglage de la cible E_{b}/N₀ des groupes de commande de puissance restants dans les trames.

18. Procédé selon la revendication 16, dans lequel
le réglage de la puissance allouée aux symboles de trame non affectés par la recherche et l'augmentation de la puissance allouée aux autres symboles de trame affectés par la recherche comprenant l'augmentation de la cible E_{b}/N₀ d'un nombre prédéterminé de groupes de commande de puissance rapide en boucle fermée en liaison directe en fonction d'une variation de cible en dB ; et le reréglage de l'allocation de puissance comprend en outre le réglage de la cible E_{b}/N₀ des groupes de commande de puissance restants dans les trames en comparant l'énergie de symbole totale reçue par la trame courante à l'énergie requise par trame pour obtenir le taux d'erreur de trame cible.

19. Procédé selon la revendication 16, dans lequel :
le réglage de la puissance allouée aux symboles de trame non affectés par la recherche et l'augmentation de la puissance allouée aux autres symboles de trame affectés par la recherche comprenant l'augmentation de la cible E_{b}/N₀ d'un nombre prédéterminé de groupes de commande de puissance rapide en boucle fermée en liaison directe en fonction d'une variation de cible en dB et l'augmentation de la puissance d'émission totale en liaison inverse à un niveau maximum tolérable tel que déterminé par la station de base (106) et communiqué à la station d'utilisateur (102) ; et
le reréglage de l'allocation de puissance comprenant en outre le réglage de la cible E_{b}/N₀ des groupes de commande de puissance restants dans les trames en comparant l'énergie de symbole totale reçue dans la trame courante à l'énergie requise par trame pour obtenir le taux d'erreur de trame cible et la reprise de contrôle normal de puissance d'émission totale en liaison inverse après la dernière limite de trame.

20. Procédé selon l'une quelconque des revendications 16 à 19, dans lequel le traitement des échantillons de signal comprend :
déterminer des mesures d'intensité de pilote ; et
indiquer les mesures d'intensité de pilote à la station de base (106).

21. Station d'utilisateur (102) de communication sans fil selon la revendication 7, dans laquelle :
les moyens d'émission de signaux comprennent un émetteur ;
les moyens de réception de signaux comprennent un récepteur ; et
un processeur comprend les moyens de configuration de la station d'utilisateur (102), les moyens d'échantillonnage d'une fréquence cible et les moyens de traitement.

22. Station d'utilisateur (102) selon la revendication 21, dans laquelle le processeur est configuré pour pallier la perte de symboles en liaison directe pendant l'échantillonnage de la fréquence cible en augmentant la cible E_{b}/N₀ d'un nombre prédéterminé de groupes de commande de puissance rapide en boucle fermée en liaison directe avant l'échantillonnage de la fréquence cible ; et, après échantillonnage de la fréquence cible, en réglant la cible E_{b}/N₀ des groupes de commande de puissance restants dans les trames en comparant l'énergie de symbole totale reçue dans la trame courante à l'énergie requise par trame pour obtenir le taux d'erreur de trame cible.

23. Station d'utilisateur (102) selon la revendication 21, dans laquelle le processeur est configuré pour :
pallier la perte de symboles en liaison directe dans l'échantillonnage de la fréquence cible en augmentant le cible E_{b}/N₀ d'un nombre prédéterminé de groupes de commande de puissance rapide en boucle fermée en liaison directe avant l'échantillonnage de la fréquence cible ; et, après échantillonnage de la fréquence cible, en réglant la cible E_{b}/N₀ des groupes de commande de puissance restants dans les trames en comparant l'énergie de symbole totale reçue dans la trame courante à l'énergie requise par trame pour obtenir le taux d'erreur de trame cible ; et
augmenter la puissance d'émission totale sur la liaison inverse tandis que l'on échantillonne la fréquence cible.

24. Station d'utilisateur (102) selon la revendication 21, dans laquelle le processeur est configuré pour :
pallier la perte de symboles en liaison directe pendant l'échantillonnage de la fréquence cible en augmentant la cible E_{b}/N₀ d'un nombre prédéterminé de groupes de commande de puissance rapide en boucle fermée en liaison directe avant l'échantillonnage de la fréquence cible ; et, après l'échantillonnage de la fréquence cible, en réglant la cible E_{b}/N₀ des groupes de commande de puissance restants dans les trames en comparant l'énergie de symbole totale reçue dans la trame courante à l'énergie requise par trame pour obtenir le taux d'erreur de trame cible ;
augmenter la puissance d'émission totale en liaison inverse pendant l'échantillonnage de fréquence cible, en réglant la puissance d'émission totale en liaison inverse à un niveau maximum tolérable tel que déterminé par la station de base (106) et communiqué aux moyens d'échantillonnage en tant que partie de la commande d'échantillonnage.

25. Station d'utilisateur (102) selon la revendication 21, dans laquelle le processeur est configuré pour :
pallier la perte de symboles en liaison directe pendant l'échantillonnage de la fréquence cible en augmentant la cible E_{b}/N₀ d'un nombre prédéterminé de groupes de commande de puissance rapide en boucle fermée en liaison directe avant l'échantillonnage de la fréquence cible ; et, après l'échantillonnage de la fréquence cible, en réglant la cible E_{b}/N₀ des groupes de commande de puissance restants dans les trames en comparant l'énergie de symbole totale reçue dans la trame courante à l'énergie requise par trame pour obtenir le taux d'erreur de trame cible ;
augmenter la puissance d'émission totale sur la liaison inverse pendant l'échantillonnage de la fréquence cible en réglant la puissance d'émission totale sur la liaison inverse à un niveau maximum tolérable tel que déterminé par la station de base (106) et communiqué au processeur en tant que partie de la commande d'échantillonnage ; et
ignorer les commandes de la station de base (106) de réduction de la puissance d'émission totale pendant l'échantillonnage de la fréquence cible.

26. Système de communication sans fil (100), comprenant :
des moyens pour émettre une communication à partir d'une station de base (106) qui commande à une station d'utilisateur (102) sélectionnée de réaliser une excursion de recherche de fréquence vers une fréquence cible ;
des moyens de réception de la communication au niveau de la station d'utilisateur (102) sélectionnée et d'accord de la station d'utilisateur (102) sélectionnée sur la fréquence cible à partir de communications directe et inverse à une première fréquence ;
des moyens de configuration de la station d'utilisateur (102) pour pallier la perte de symboles en liaison directe pendant l'échantillonnage de la fréquence cible en augmentant un rapport cible d'énergie par symbole E_{b}/N₀ de la commande de puissance en liaison directe allouée aux autres symboles affectés par la recherche de la station d'utilisateur (102) ;
des moyens de recueil des échantillons de signaux à la fréquence cible et mémoriser les échantillons de signaux dans la mémoire de la station d'utilisateur (102) sélectionnée ;
des moyens d'accord de la station d'utilisateur (102) sélectionnée à la fréquence initiale et de reprise des communications directe et inverse tandis que l'on traite les échantillons de signal mémorisés ; et
des moyens d'émission des échantillons de signal traités de la station d'utilisateur (102) sélectionnée à la station de base (106).

27. Système selon la revendication 26, dans lequel les moyens d'émission des résultats de traitement d'échantillons à la station de base (106) comprennent des moyens de transmission des mesures d'intensité de pilote à la station de base (106).

28. Système selon la revendication 26 ou 27, dans lequel les moyens de configuration sont agencés pour pallier la perte de symboles en liaison directe pendant l'échantillonnage de la fréquence cible en augmentant la cible E_{b}/N₀ de la commande de puissance rapide en boucle en liaison directe de la station d'utilisateur (102).

29. Système selon la revendication 26 ou 27, dans lequel les moyens de configuration sont configurés en outre pour augmenter la cible E_{b}/N₀ d'un nombre prédéterminé de groupes de commande de puissance rapide en boucle fermée en liaison directe avant d'accorder sur la fréquence cible.

30. Système selon la revendication 26 ou 27, dans lequel les moyens de configuration sont configurés pour pallier la perte de symboles en liaison directe pendant l'échantillonnage de la fréquence cible en augmentant la cible E_{b}/N₀ du nombre prédéterminé de groupes de commande de puissance rapide en boucle fermée en liaison directe avant d'accorder la fréquence cible et, après accord de la fréquence cible, en réglant la cible E_{b}/N₀ des groupes de commande de puissance restants dans les trames.

31. Système selon la revendication 26 ou 27, dans lequel les moyens de configuration sont configurés pour pallier la perte de symboles en liaison directe pendant l'échantillonnage de la fréquence cible en augmentant la cible E_{b}/N₀ d'un nombre prédéterminé de groupes de commande de puissance rapide en boucle fermée en liaison directe avant accord sur la fréquence cible et, après accord de la fréquence cible, en réglant la cible E_{b}/N₀ des groupes de commande de puissance restants dans les trames en comparant l'énergie de symbole totale reçue dans les trames courantes à l'énergie requise par trame pour obtenir le taux d'erreur de trame cible.

32. Système selon la revendication 26 ou 27, dans lequel les moyens de configuration sont configurés pour :
pallier la perte de symboles en liaison directe pendant l'échantillonnage de la fréquence cible en augmentant la cible E_{b}/N₀ d'un nombre prédéterminé de groupes de commande de puissance rapide en boucle fermée en liaison directe avant accord sur la fréquence cible, et régler la cible E_{b}/N₀ des groupes de commande de puissance restants dans les trames ; et, après accord de la fréquence cible, en comparant l'énergie de symbole totale reçue dans la trame courante à l'énergie requise par trame pour obtenir le taux d'erreur de trame cible ; et
augmenter la puissance d'émission totale de la liaison inverse pendant l'échantillonnage de la fréquence cible.

33. Système selon la revendication 26 ou 27, dans lequel les moyens de configuration sont configurés pour :
pallier la perte de symboles en liaison directe pendant l'échantillonnage de la fréquence cible en augmentant la cible E_{b}/N₀ d'un nombre prédéterminé de groupes de commande de puissance rapide en boucle fermée en liaison directe avant accord sur la fréquence cible et, après accord de la fréquence cible, régler la cible E_{b}/N₀ des groupes de commande de puissance restants dans les trames en comparant l'énergie de symbole totale reçue dans la trame courante à l'énergie requise par trame pour obtenir le taux d'erreur de trame cible ; et
augmenter la puissance d'émission totale sur la liaison inverse pendant l'échantillonnage de la fréquence cible, en réglant la puissance d'émission totale sur la liaison inverse à un niveau maximum tolérable tel que déterminé par la station de base (106) et communiqué aux moyens de réception en tant que partie de la commande d'échantillonnage.

34. Système selon la revendication 26 ou 27, dans lequel les moyens de configuration sont configurés pour :
pallier la perte de symboles en liaison directe pendant l'échantillonnage de la fréquence cible en augmentant la cible E_{b}/N₀ d'un nombre prédéterminé de groupes de commande de puissance rapide en boucle fermée en liaison directe avant accord sur la fréquence cible, et, après accord de la fréquence cible, en réglant la cible E_{b}/N₀ des groupes de commande de puissance restants dans les trames en comparant l'énergie de symbole totale reçue dans la trame courante à l'énergie requise par trame pour obtenir le taux d'erreur de trame cible ;
augmenter la puissance d'émission totale sur la liaison inverse pendant l'échantillonnage de la fréquence cible, en réglant la puissance d'émission totale sur la liaison inverse à un niveau maximum tolérable tel que déterminé par la station de base (106) et communiqué aux moyens de recueil de signal d'échantillonnage en tant que partie de la commande d'échantillonnage ; et
ignorer les ordres en provenance de la station de base (106) de réduction de la puissance d'émission totale pendant l'échantillonnage de la fréquence cible.
